(19) Europäisches Patentamt
European Patent Office
Office européen des brevets

(11) EP 0 632 069 B1

(12) # EUROPÄISCHE PATENTSCHRIFT

(45) Veröffentlichungstag und Bekanntmachung des Hinweises auf die Patenterteilung:
**07.05.1997 Patentblatt 1997/19**

(51) Int Cl.[6]: **C08F 220/12**

(21) Anmeldenummer: **94109817.0**

(22) Anmeldetag: **24.06.1994**

(54) **Perlpolymerisate auf der Basis von Alkylestern der Methacrylsäure**

Bead polymers based on alkyl ester of methacrylic acid

Polymères en perles à base d'esters alkyliques d'acide méthacrylique

(84) Benannte Vertragsstaaten:
**BE CH DE ES FR GB IT LI NL**

(30) Priorität: **02.07.1993 DE 4322021**

(43) Veröffentlichungstag der Anmeldung:
**04.01.1995 Patentblatt 1995/01**

(73) Patentinhaber: **BASF Aktiengesellschaft**
**67063 Ludwigshafen (DE)**

(72) Erfinder:
- **Deckers, Andreas, Dr.**
  **D-55234 Flomborn (DE)**
- **Besecke, Siegmund, Dr., p.A. Erich Besecke**
  **D-31787 Hameln (DE)**
- **Endlich, Karl-Ludwig**
  **D-55120 Mainz (DE)**

(56) Entgegenhaltungen:
**EP-A- 0 489 318**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 632 069 B1

Printed by Jouve, 75001 PARIS (FR)

## Beschreibung

Die vorliegende Erfindung betrifft Perlpolymerisate aus

80 bis 99 Gew.-% mindestens eines $C_1$-$C_{18}$-Alkylesters der acrylsäure

und

1 bis 20 Gew.-% mindestens eines $C_1$-$C_{18}$-Alkylesters der Acrylsäure,

erhältlich durch Polymerisation bei einer über den Großteil der Polymerisationszeit annähernd konstanten Temperatur zwischen 100 und 140°C mittels eines Initiatorsystems aus mindestens zwei peroxidischen Initiatoren I unterschiedlicher Zerfallstemperatur T, bei denen jeweils die Hälfte des Initiators nach 1 h zerfallen ist, wobei

- der Initiator $I_{min}$ mit der tiefsten Zerfallstemperatur eine Zerfallstemperatur $T_{min}$ im Bereich von 60 bis 100°C hat,
- der Initiator $I_{max}$ mit der höchsten Zerfallstemperatur eine Zerfallstemperatur $T_{max}$ im Bereich von 100 bis 140°C hat, die Differenz von $T_{max}$ und $T_{min}$ größer als 10°C und $I_{max}$ ein Perketal der allgemeinen Formel (I) ist

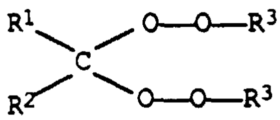

(I),

in der die Reste $R^1$ und $R^2$ gleiche oder verschiedene Alkylreste mit 1 bis 5 Kohlenstoffatomen sind, wobei $R^1$ und $R^2$ zu einem 5- oder 6-Ring verbunden sein können und $R^3$ ein tert.-Butyl- oder tert.-Amylrest ist sowie

- weitere Initiatoren $I_n$, die gewünschtenfalls mitverwendet werden können und Zerfallstemperaturen $T_n$ zwischen $T_{min}$ und $T_{max}$ aufweisen

in Gegenwart eines Schutzkolloids, mit der Maßgabe, daß man 20 bis 80 Gew.-% des $C_1$-$C_{18}$-Alkylesters der Acrylsäure erst nach einem Umsatz im Bereich von 20 bis 80 %, bezogen auf die zu Beginn eingesetzte Monomermenge, zusetzt.

Des weiteren betrifft die Erfindung ein Verfahren zur Herstellung dieser Perlpolymerisate sowie deren Verwendung zur Herstellung von Formkörpern und Formkörpern, enthaltend die erfindungsgemäßen Perlpolymerisate.

Aus der EP-A 489 318 sind Substanz- und Suspensionscopolymerisate auf der Basis von Methylmethacrylat bekannt, die durch Polymerisation bei einer über den Großteil der Polymerisationszeit annähernd konstanten Temperatur zwischen 100 und 140°C mittels eines Initiatorsystems aus mindestens zwei peroxidischen Initiatoren I unterschiedlicher Zerfallstemperatur T, bei denen jeweils die Hälfte des Initiators nach 1 h zerfallen ist, wobei

- der Initiator $I_{min}$ mit der tiefsten Zerfallstemperatur eine Zerfallstemperatur $T_{min}$ im Bereich von 60 bis 100°C hat,
- der Initiator $I_{max}$ mit der höchsten Zerfallstemperatur eine Zerfallstemperatur $T_{max}$ im Bereich von 100 bis 140°C hat, die Differenz von $T_{max}$ und $T_{min}$ größer als 10°C und $I_{max}$ ein Perketal der allgemeinen Formel (I) ist

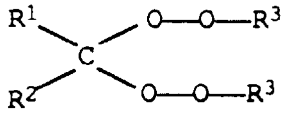

(I),

in der die Reste $R^1$ und $R^2$ gleiche oder verschiedene Alkylreste mit 1 bis 5 Kohlenstoffatomen sind, wobei $R^1$ und $R^2$ zu einem 5- oder 6-Ring verbunden sein können und $R^3$ ein tert.-Butyl- oder tert.-Amylrest ist sowie

- weitere Initiatoren $I_n$, die gewünschtenfalls mitverwendet werden können und Zerfallstemperaturen $T_n$ zwischen $T_{min}$ und $T_{max}$ aufweisen

erhältlich sind. Nachteilig bei diesen Copolymerisaten ist ihre für manche Anwendungsgebiete unzureichende thermische Verarbeitungsstabilität.

Der Erfindung lagen daher die Bereitstellung von Perlpolymerisaten auf der Basis von Alkylestern der Methacrylsäure als Aufgabe zugrunde, die eine verbesserte thermische Verarbeitungsstabilität aufweisen.

Demgemäß wurden die eingangs definierten Perlpolymerisate gefunden.

Des weiteren wurden ein Verfahren zu deren Herstellung, deren Verwendung zur Herstellung von Formkörpern sowie Formkörper, enthaltend die erfindungsgemäßen Perlpolymerisate, gefunden.

Als $C_1$-$C_{18}$-Alkylester der Methacrylsäure kommen bevorzugt die $C_1$-$C_4$-Alkylester wie Methylmethacrylat ("MMA"), Ethylmethacrylat, n-, i-Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomere.

Als $C_1$-$C_{18}$-Alkylester der Acrylsäure verwendet man bevorzugt die $C_1$-$C_4$-Alkylester wie Methylacrylat ("MA"), Ethylacrylat, n-, i-Propylacrylat, Propylacrylat, n-Butylacrylat, Isobutylacrylat und wobei Methylacrylat besonders bevorzugt ist, sowie Mischungen dieser Monomeren.

Die $C_1$-$C_{18}$-Alkylester der Methacrylsäure setzt man erfindungsgemäß in Mengen im Bereich von 80 bis 99, bevorzugt von 90 bis 99 Gew.-% ein.

Die $C_1$-$C_{18}$-Alkylester der Acrylsäure setzt man erfindungsgemäß in Mengen im Bereich von 1 bis 20, vorzugsweise von 1 bis 10 Gew.-% ein.

Als Initiatoren $I_{min}$ eignen sich beispielsweise
aliphatische und aromatische Diacylperoxide wie

Diisononanoylperoxid (T = 78°C),
Didecanoylperoxid (T = 80°C),
Dilauroylperoxid (T = 80°C),
Dibenzoylperoxid (T = 91°C),

Peroxydicarbonate wie
Diisopropylperoxydicarbonat (T = 61°C) und
Alkylperester wie

t-Butylperneodecanoat (T = 64°C),
t-Amylperpivalat (T = 71°C),
t-Butylperpivalat (T = 74°C) und
t-Butyl-per-2-ethylhexanoat (T = 92°C).

Initiatoren $I_{max}$ sind die definitionsgemäßen Perketale (1), unter denen

1,1-Bis-(t-butylperoxy)-3,3,5-trimethylcyclohexan (T = 114°C),
1,1-Bis-(t-butylperoxy)-cyclohexan (T = 117°C) und
2,2-Bis-(t-butylperoxy)-butan (T = 124°C)

bevorzugt werden.

Für eine besonders gleichmäßige Steuerung der Polymerisation und damit für die Herstellung von Polymerisaten mit möglichst einheitlicher Molmasse empfiehlt sich die Mitverwendung weiterer Initiatoren $I_n$, deren Zerfallstemperaturen zwischen $T_{min}$ und $T_{max}$ liegen, wobei sich die Zerfallstemperaturen dieser Initiatoren untereinander bzw. von $T_{min}$ und $T_{max}$ jeweils um 10 bis 20°C unterscheiden sollten.

Als derartige weitere Initiatoren $I_n$ eignen sich diejenigen, die für $I_{min}$ und $I_{max}$ angegeben wurden. Für den Zerfallstemperaturbereich zwischen 100 und 140°C kann man außer den Perketalen beispielsweise noch Dialkylperoxide wie
t-Butylcumylperoxid (T = 138°C) und
Alkylperester wie

t-Butylperisononanoat (T = 119°C) und
t-Butylperbenzoat (T = 124°C)

verwenden.

Die angegebenen Werte für die Zerfallstemperaturen T bei einer 1-Stunden-Halbwertszeit stammen aus den Firmenschriften A 3.2.1 und A 3.7.1 "Organische Peroxide" der Peroxid-Chemie GmbH. Weitere mögliche Initiatoren sind dort angegeben.

Die Gesamtmenge aller Initiatoren beträgt vorzugsweise 0,001 bis 1 mol-%, besonders 0,01 bis 0,1 mol-%, bezogen auf die Gesamtmenge der eingesetzten Monomeren.

Der Anteil der Initatoren mit den Zerfallstemperaturen zwischen 100 und 140°C beträgt vorzugsweise 20 bis 80 mol-%, besonders 30 bis 60 mol-%, bezogen auf die Gesamtinitiatormenge, wovon bevorzugt mindestens 25 mol-% auf das Perketal (1) entfallen sollten.

Eine Verbesserung hinsichtlich einer möglichst engen Molmassenverteilung erzielt man im allgemeinen durch übliche Mitverwendung von Molmassenreglern in Mengen von 0,02 bis 2 Gew.-%, bezogen auf die Gesamtmenge der Monomeren. Solche Regler, mit denen sich je nach Menge ein mittleres Molekulargewicht zwischen 20 000 und 200 000 einstellen läßt, sind vorzugsweise $C_4$-$C_{18}$-Alkylmercaptane wie n-Dodecylmercaptan und t-Dodecylmercaptan.

Erfindungsgemäß führt man die Polymerisation über den Großteil der Polymerisationszeit bei annähernd konstanter Temperatur, also in einem möglichst engen Temperaturintervall von ±2°C einer einmal gewählten Anfangstemperatur aus. Unter Großteil sind hierbei mindestens 50 % der Gesamtzeit zu verstehen. Eine geringere Anfangstemperatur und tiefere oder höhere Temperaturen gegen Ende der Polymerisation sowie auch zwischenzeitliche Abweichungen haben meist keinen negativen Einfluß auf die Produktqualität, jedoch ist eine isotherme Reaktionsführung über die gesamte Polymerisationszeit grundsätzlich von Vorteil. Sofern bei großtechnischen Ansätzen im Polymerisationskessel ein Temperaturgefälle - etwa von innen nach außen - zu beobachten ist, gilt die Maßgabe der Temperaturkonstanz jeweils für die Temperatur an der gleichen Stelle.

Da die Polymerisationstemperatur über dem Siedepunkt des Methylmethacrylats liegt, ist es in der Regel erforderlich, die Polymerisation mindestens unter dem Eigendruck des Polymerisationsgemisches auszuführen, also im Bereich von 1,1 bis 2,5 bar. Besonders vorteilhaft ist es jedoch, zur Vermeidung von Dampfblasen unter einem Druck zu arbeiten, der 0,5 bis 20 bar über dem Eigendruck liegt, den das Monomerengemisch unter der gewählten Reaktionstemperatur hat, wobei dieser Druck durch Aufpressen eines inerten Gases wie Stickstoff erzeugt werden kann.

Ein wesentliches Merkmal der Erfindung ist es, daß man von 20 bis 80, vorzugsweise von 40 bis 60 Gew.-% des $C_1$-$C_{18}$-Alkylesters der Acrylsäure erst nach einem Umsatz im Bereich von 20 bis 80, bevorzugt von 30 bis 70 %, bezogen auf die zu Beginn eingesetzte Monomermenge, zusetzt.

Eine Nachdosierung bei einem Umsatz unter 20 % führt nach den bisherigen Beobachtungen zu keiner signifikanten Verbesserung der thermischen Verarbeitungsstabilität. Eine Nachdosierung bei einem Umsatz über 80 % führt dagegen im allgemeinen zu chemisch instabilen Produkten, da zu Beginn der Reaktion (vor der Nachdosierung) ein Copolymerisat mit einem sehr geringen Methacrylsäure säure("MA")-Gehalt gebildet wird.

Im übrigen nimmt man die Polymerisation üblicherweise in an sich bekannter Weise nach der Methodik der Perlpolymerisation vor. Dazu legt man in der Regel die Wasser- und Monomerphase unter Zusatz eines Schutzkolloides vor.

Bevorzugt verwendet man als Schutzkolloid ein Copolymer, erhältlich aus Methacrylsäure und Methylmethacrylat, vorzugsweise aus 80 bis 50 Gew.-% Methacrylsäure und 50 bis 20 Gew.-% Methylmethacrylat, besonders bevorzugt aus 64 Gew.-% Methacrylsäure und 36 Gew.-% Methylmethacrylat.

Die Schutzkolloide setzt man im allgemeinen in Mengen im Bereich von 0,0001 bis 1,0, bevorzugt von 0,001 bis 0,1 Gew.-%, bezogen auf die Gesamtmenge an Monomeren, ein.

Darüber hinaus kann man die Wasserphase puffern. Üblicherweise verwendet man hierfür Salze der Phosphorsäure wie Mischungen von Kaliumdihydrogenphosphat und Dinatriumhydrogenphosphat.

Für die Verbesserung der Verarbeitungseigenschaften können Thermostabilisatoren, z.B. sterisch gehinderte Phenole und Gleitmittel, z.B. Stearinsäure zugegeben werden.

In der Monomerphase befinden sich im allgemeinen der Molmassenregler sowie das erfindungsgemäße Initiatorsystem.

Durch mehrmaliges Aufpressen eines Inertgases wie Stickstoff und jeweils anschließendes Entspannen wird der Reaktionsansatz üblicherweise inertisiert. Nach erneutem Aufpressen von Inertgas dispergiert man zweckmäßig zunächst in der Kälte die Monomerphase durch Rühren in der Wasserphase und erhitzt dann auf die Polymerisationstemperatur, die oberhalb des Siedepunktes von Methylmethacrylat im Bereich von 100 bis 140°C liegt. Der Druck im Kessel liegt im allgemeinen zwischen 2 und 100 bar. Nach einer Reaktionszeit von 4 Stunden ist die Polymerisation in der Regel abgeschlossen.

Besonders bevorzugte erfindungsgemäß hergestellte Perlpolymerisate sind solche, bei denen mindestens 50, vorzugsweise mindestens 80 Gew.-% der Polymerisatteilchen einen Durchmesser im Bereich von 0,2 bis 0,8 mm aufweisen.

Die erfindungsgemäßen Polymerisate kann man in an sich bekannter Weise wie Extrudieren, Kalandrieren oder Spritzgießen zu Formkörpern weiterverarbeiten, wobei bei der Verarbeitung die hohe thermische Verarbeitungsstabilität von großem Vorteil ist, weil hierdurch beispielsweise Verfärbungen und Schlieren vermieden werden.

## Beispiele

Die Teilchengröße wurde durch Siebanalyse bestimmt.

Um die thermische Stabilität zu ermitteln, wurden Substanzproben aus den jeweiligen Beispielen mittels Thermogravimetrie (TGA) (Mettler TG 50) auf 490°C bei einer Aufheizrate von 10°C/min erhitzt und dabei die Massenveränderung bestimmt. Eine Auftragung der relativen Masse (Masse der Probe bei einer bestimmten Temperatur/Anfangsmasse bei Raumtemperatur) gegen die Temperatur ergab jeweils eine Kurve, die sich in drei Teile einteilen ließ: (a) einen oberen, fast waagrechten Ast, der den Beginn des Versuches bis zu dem Zeitpunkt widerspiegelt, an dem Teile der Probe sich zu zersetzen begannen, (c) einen unteren waagrechten Ast, der anzeigt, daß die Zersetzung der Polymerprobe abgeschlossen ist, und einen dazwischenliegenden, die Äste (a) und (c) verbindenen Teil.

Zur Bestimmung der thermischen Stabilität definierte man nun zwei Geraden, die die Asymptoten der Kurvenabschnitte (a) und (b) repräsentierten. Man erhielt die eine Kurve durch Verlängerung des nicht gekrümmten Teils der Kurve (a). Die andere Gerade war durch den Wendepunkt des Kurvenabschnitts (b) und der Steigung der Kurve (b) in diesem Punkt definiert. Als Maß für die thermische Stabilität wurde die charakteristische Temperatur, $T_z$, definiert, die sich aus dem Schnittpunkt der beiden Geraden ergibt. Zur Berechnung wurde ein auf dem TGA-Meßgerät installiertes Computerprogramm der Fa. Mettler verwendet.

Der $T_z^2$-Wert wurde als derjenige Temperaturwert bei der $T_z$-Bestimmung definiert, bei der das Gewicht der eingewogenen Probe um 2 Gew.-% verringert war.

Die Lösungsviskosität wird angegeben durch die Viskositätszahl VZ, die die relative Erhöhung der Viskosität eines Lösungsmittels durch 0,1 bis 1,0 g/100 ml gelöstes Polymer, geteilt durch die Konzentration in g/100 ml angibt. Die Viskositätszahlen steigen mit dem Polymerisationsgrad an.

$$VZ = \left( \frac{\eta}{\eta_o} - 1 \right) \cdot \frac{1}{C}$$

$\frac{\eta}{\eta_o}$ Viskositätsverhältnis mit

$\eta$ = Viskosität der Polymerlösung definierter Konzentration
$\eta_o$ = Viskosität des Lösungsmittels

C = Konzentration der Lösung in g/ml.

Die Bestimmung der VZ erfolgte bei 25°C in Chloroform bei einer Einwaage von 2,6 g Polymer je 1000 ml Lösung.

Die Polymerisationen wurden in einem 1000-1-fassenden (Edelstahlkessel, emailliert) durchgeführt. Zu diesem Zweck wurde eine Mischung aus 190 kg Wasser, 1,4 kg des Natriumsalzes eines Copolymerisates aus 64 Gew.-% Methacrylsäure und 36 % Methylmethacrylat (MMA) in Form einer 1,6 gew.-%igen wäßrigen Lösung bzw. 5,3 kg einer 20 gew.-%igen wäßrigen Polyacrylsäurelösung als Schutzkolloid und 1,4 kg Natriumphosphat als Puffer, 0,55 kg n-Dodecylmercaptan als Regler sowie Methylmethacrylat (MMA) und Methylacrylat (MA) entsprechend der Tabelle vorgelegt.

Zunächst wurde das Gemisch inklusive Starter (s. Tabelle) bei Raumtemperatur mehrmals mit Stickstoff gespült, sodann 0,5 bar (Überdruck) Stickstoff aufgepreßt, anschließend unter Rühren auf 125°C erhitzt und 3 h bei dieser Temperatur gehalten. Nach Abkühlen und Entspannen wurde das Polymerisat abgetrennt, gewaschen und getrocknet.

Tabelle

| Nr. | MMA [kg] | MA [kg] | Initator | Schutzkolloid | Nachdosage [%] | Teilchengröße [mm] [Gew.-%] < 0,2 | 0,2-0,8 | > 0,8 | $T_{Z2}$ [°C] | $T_Z$ [°C] | VZ [ml/g] |
|---|---|---|---|---|---|---|---|---|---|---|---|
| zum Vergleich | | | | | | | | | | | |
| 1 | 183 | 2 | Per.[1] | 1 | 0 | 1 | 85 | 14 | 286 | 332 | 74 |
| erfindungsgemäß | | | | | | | | | | | |
| 2 | 183 | 2 | Per.[1] | 1 | 50 | 2 | 84 | 14 | 307 | 353 | 74 |
| zum Vergleich | | | | | | | | | | | |
| 3 | 174 | 11 | Per.[1] | 1 | 0 | 2 | 87 | 11 | 308 | 358 | 70 |
| erfindungsgemäß | | | | | | | | | | | |
| 4 | 174 | 11 | Per.[1] | 1 | 50 | 3 | 89 | 8 | 311 | 365 | 70 |
| zum Vergleich | | | | | | | | | | | |
| 5 | 174 | 11 | AIBN[2] | 1 | 0 | 4 | 91 | 5 | 298 | 349 | 69 |
| 6 | 174 | 11 | AIBN[2] | 1 | 50 | 5 | 89 | 6 | 305 | 355 | 70 |
| 7 | 174 | 11 | Per.[1] | 2 | 0 | 23 | 76 | 1 | 299 | 345 | 71 |
| erfindungsgemäß | | | | | | | | | | | |
| 8 | 174 | 11 | Per.[1] | 2 | 50 | 25 | 74 | 1 | 302 | 350 | 70 |

1) Gemisch aus 87 g t-Butyl-per-ethylhexylhexanoat, 76 g t-Butyl-per-3,5,5-trimethylhexanoat und 45 g 2,2-Bis-(t-butylperoxy)-butan (50 %ig in Aliphaten)

2) Azobisisobutyronitril

Schutzkolloid 1: MAS/MMA-Copolymer

Schutzkolloid 2: Polyacrylsäure

## Patentansprüche

1. Perlpolymerisate aus

80 bis 99 Gew.-% mindestens eines $C_1$-$C_{18}$-Alkylesters der Methacrylsäure

und

1 bis 20 Gew.-% mindestens eines $C_1$-$C_{18}$-Alkylesters der Acrylsäure,

erhältlich durch Polymerisation bei einer über den Großteil der Polymerisationszeit annähernd konstanten Temperatur zwischen 100 und 140°C mittels eines Initiatorsystems aus mindestens zwei peroxidischen Initiatoren I unterschiedlicher Zerfallstemperatur T, bei denen jeweils die Hälfte des Initiators nach 1 h zerfallen ist, wobei

- der Initiator $I_{min}$ mit der tiefsten Zerfallstemperatur eine Zerfallstemperatur Tmin im Bereich von 60 bis 100°C hat,

- der Initiator $I_{max}$ mit der höchsten Zerfallstemperatur eine Zerfallstemperatur $T_{max}$ im Bereich von 100 bis 140°C hat, die Differenz von $T_{max}$ und $T_{min}$ größer als 10°C und $I_{max}$ ein Perketal der allgemeinen Formel (I) ist

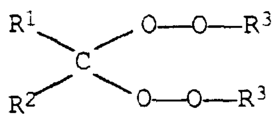

(I),

in der die Reste $R^1$ und $R^2$ gleiche oder verschiedene Alkylreste mit 1 bis 5 Kohlenstoffatomen sind, wobei $R^1$ und $R^2$ zu einem 5- oder 6-Ring verbunden sein können und $R^3$ ein tert.-Butyl- oder tert.-Amylrest ist sowie

- weitere Initiatoren $I_n$, die gewünschtenfalls mitverwendet werden können und Zerfallstemperaturen $T_n$ zwischen $T_{min}$ und $T_{max}$ aufweisen

in Gegenwart eines Schutzkolloids, mit der Maßgabe, daß man 20 bis 80 Gew.-% des $C_1$-$C_{18}$-Alkylesters der Acrylsäure erst nach einem Umsatz im Bereich von 20 bis 80 %, bezogen auf die zu Beginn eingesetzte Monomermenge, zusetzt.

2. Perlpolymerisate gemäß Anspruch 1, dadurch gekennzeichnet, daß mindestens 50 Gew.-% der Polymerisatteilchen einen Durchmesser im Bereich von 0,2 bis 0,8 mm aufweisen.

3. Perlpolymerisate gemäß den Ansprüchen 1 oder 2, dadurch gekennzeichnet, daß man als Schutzkolloid ein Copolymer, erhältlich aus Methacrylsäure und Methylmethacrylat, einsetzt.

4. Perlpolymerisate nach den Ansprüchen 1 bis 3, erhältlich unter Verwendung von insgesamt 0,001 bis 1 mol-% als Gesamtmenge aller Initiatoren, bezogen auf die Gesamtmenge der eingesetzten Monomeren.

5. Perlpolymerisate nach den Ansprüchen 1 bis 4, erhältlich mit einem Anteil an Initiatoren, die eine Zerfallstemperatur von 100 bis 140°C haben, von 20 bis 80 mol-% der Gesamtinitiatormenge.

6. Perlpolymerisate nach den Ansprüchen 1 bis 5, erhältlich unter Mitverwendung eines $C_4$-$C_{18}$-Alkylmerkaptans als Molmassenregler.

7. Verfahren zur Herstellung von Perlpolymerisaten aus

80 bis 99 Gew.-% mindestens eines $C_1$-$C_{18}$-Alkylesters der Methacrylsäure

und

1 bis 20 Gew.-% mindestens eines $C_1$-$C_{18}$-Alkylesters der Acrylsäure,

durch Polymerisation bei einer über den Großteil der Polymerisationszeit annähernd konstanten Temperatur zwischen 100 und 140°C mittels eines Initiatorsystems aus mindestens zwei peroxidischen Initiatoren I unterschiedlicher Zerfallstemperatur T, bei denen jeweils die Hälfte des Initiators nach 1 h zerfallen ist, wobei

- der Initiator Imin mit der tiefsten Zerfallstemperatur eine Zerfallstemperatur Tmin im Bereich von 60 bis 100°C hat,

- der Initiator $I_{max}$ mit der höchsten Zerfallstemperatur eine Zerfallstemperatur $T_{max}$ im Bereich von 100 bis 140°C hat, die Differenz von $T_{max}$ und $T_{min}$ größer als 10°C und $I_{max}$ ein Perketal der allgemeinen Formel (I) ist

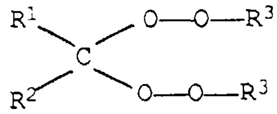 (I),

in der die Reste $R^1$ und $R^2$ gleiche oder verschiedene Alkylreste mit 1 bis 5 Kohlenstoffatomen sind, wobei $R^1$ und $R^2$ zu einem 5- oder 6-Ring verbunden sein können und $R^3$ ein tert.-Butyl- oder tert.-Amylrest ist sowie

- weitere Initiatoren $I_n$, die gewünschtenfalls mitverwendet werden können und Zerfallstemperaturen $T_n$ zwischen $T_{min}$ und $T_{max}$ aufweisen

in Gegenwart eines Schutzkolloids, dadurch gekennzeichnet, daß man 20 bis 80 Gew.-% des $C_1$-$C_{18}$-Alkylesters der Acrylsäure erst nach einem Umsatz im Bereich von 20 bis 80 %, bezogen auf die zu Beginn eingesetzte Monomermenge, zusetzt.

**8.** Verwendung der Perlpolymerisate gemäß den Ansprüchen 1 bis 6 zur Herstellung von Formkörpern.

**9.** Formkörper, enthaltend Perlpolymerisate gemäß den Ansprüchen 1 bis 6.

**Revendications**

**1.** Polymères en perles constitués par
à concurrence de 80 à 99% en poids, au moins un ester alkylique en $C_1$-$C_{18}$ d'acide méthacrylique
et
à concurrence de 1 à 20% en poids, au moins un ester alkylique en $C_1$-$C_{18}$ d'acide acrylique,
que l'on obtient par polymérisation à une température entre 100 et 140°C approximativement constante pendant la majeure partie du temps de polymérisation, au moyen d'un système d'initiateurs constitué par au moins deux initiateurs peroxydiques I possédant une température de décomposition T différente, dans lesquels respectivement la moitié de l'initiateur est décomposée après 1 heure,

- l'initiateur $I_{min}$ présentant la température de décomposition la plus basse possédant une température de décomposition $T_{min}$ dans le domaine de 60 à 100°C,

- l'initiateur $I_{max}$ présentant la température de décomposition la plus élevée possédant une température de décomposition $T_{max}$ dans le domaine de 100 à 140°C, la différence entre $T_{max}$ et $T_{min}$ étant supérieure à 10°C, et $I_{max}$ représentant un percétal répondant à la formule générale (I)

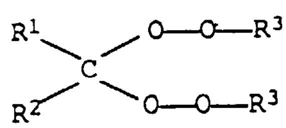 (I),

dans laquelle les radicaux $R^1$ et $R^2$ représentent des radicaux alkyle identiques ou différents contenant de 1 à 5 atomes de carbone, $R^1$ et $R^2$ pouvant être liés pour former un noyau pentaou hexagonal, et $R^3$ représente un radical tert.-butyle ou tert.-amyle, et

- d'autres initiateurs $I_n$, que l'on peut utiliser éventuellement de manière conjointe, présentant des températures de décomposition $T_n$ entre $T_{min}$ et $T_{max}$,

en présence d'un colloïde de protection, sous réserve que l'on ajoute de 20 à 80% en poids de l'ester alkylique en $C_1$-$C_{18}$ d'acide acrylique seulement après une conversion dans le domaine de 20 à 80% rapportés à la quantité de monomères mise en oeuvre au début.

**2.** Polymères en perles selon la revendication 1, caractérisés en ce qu'au moins 50% en poids des particules de polymères présentent un diamètre dans le domaine de 0,2 à 0,8 mm.

**3.** Polymères en perles selon la revendication 1 ou 2, caractérisés en ce qu'on met en oeuvre, comme colloïde de protection, un copolymère que l'on obtient à partir d'acide méthacrylique et de méthacrylate de méthyle.

**4.** Polymères en perles selon les revendications 1 à 3, que l'on obtient en utilisant au total de 0,001 à 1 mole % comme quantité totale de tous les initiateurs, rapportée à la quantité totale des monomères mise en oeuvre.

**5.** Polymères en perles selon les revendications 1 à 4, que l'on obtient à l'aide d'une fraction en initiateurs qui possèdent une température de décomposition de 100 à 140°C, qui représente de 20 à 80 moles % de la quantité d'initiateurs totale.

**6.** Polymères en perles selon les revendications 1 à 5, que l'on obtient en utilisant de manière conjointe un alkyl(en $C_4$-$C_{18}$)mercaptan comme régulateur de la masse molaire.

**7.** Procédé pour la préparation de polymères en perles constitués par
à concurrence de 80 à 99% en poids, au moins un ester alkylique en $C_1$-$C_{18}$ d'acide méthacrylique
et
à concurrence de 1 à 20% en poids, au moins un ester alkylique en $C_1$-$C_{18}$ d'acide acrylique,
par polymérisation à une température entre 100 et 140°C approximativement constante pendant la majeure partie du temps de polymérisation, au moyen d'un système d'initiateurs constitué par au moins deux initiateurs peroxydiques I possédant une température de décomposition T différente, dans lesquels respectivement la moitié de l'initiateur est décomposée après 1 heure,

- l'initiateur $I_{min}$ présentant la température de décomposition la plus basse possédant une température de décomposition $T_{min}$ dans le domaine de 60 à 100°C,

- l'initiateur $I_{max}$ présentant la température de décomposition la plus élevée possédant une température de décomposition $T_{max}$ dans le domaine de 100 à 140°C, la différence entre $T_{max}$ et $T_{min}$ étant supérieure à 10°C, et $I_{max}$ représentant un percétal répondant à la formule générale (I)

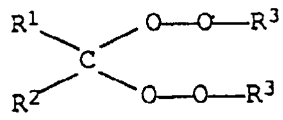

(I),

dans laquelle les radicaux $R^1$ et $R^2$ représentent des radicaux alkyle identiques ou différents contenant de 1 à 5 atomes de carbone, $R^1$ et $R^2$ pouvant être liés pour former un noyau penta- ou hexagonal, et $R^3$ représente un radical tert.-butyle ou tert.-amyle, et

- d'autres initiateurs $I_n$, que l'on peut utiliser éventuellement de manière conjointe, présentant des températures de décomposition $T_n$ entre $T_{min}$ et $T_{max}$,

en présence d'un colloïde de protection, caractérisé en ce qu'on ajoute de 20 à 80% en poids de l'ester alkylique en $C_1$-$C_{18}$ d'acide acrylique seulement après une conversion dans le domaine de 20 à 80% rapportés à la quantité de monomères mise en oeuvre au début.

**8.** Utilisation des polymères en perles selon les revendications 1 à 6 pour la fabrication de corps moulés.

**9.** Corps moulés contenant des polymères en perles selon les revendications 1 à 6.

## Claims

**1.** A bead polymer comprising
from 80 to 99% by weight of at least one $C_1$-$C_{18}$-alkyl ester of methacrylic acid
and
from 1 to 20% by weight of at least one $C_1$-$C_{18}$-alkyl ester of acrylic acid,
obtainable by polymerization at a temperature of from 100 to 140°C which is virtually constant over the major part of the polymerization time, by means of an initiator system comprising at least two peroxide initiators I having different decomposition temperatures T, where in each case half the initiator has decomposed after 1 hour,

- the initiator $I_{min}$ having the lowest decomposition temperature possessing a decomposition temperature $T_{min}$ of from 60 to 100°C,

- the initiator $I_{max}$ having the highest decomposition temperature possessing a decomposition temperature $T_{max}$ of from 100 to 140°C, the difference between $T_{max}$ and $T_{min}$ being greater than 10°C and $I_{max}$ being a perketal of the formula (I)

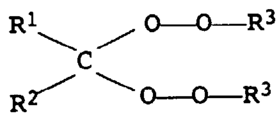

(I),

where $R^1$ and $R^2$ are identical or different alkyl radicals of 1 to 5 carbon atoms, $R^1$ and $R^2$ may be bonded to one another to form a 5- or 6-membered ring and $R^3$ is tert-butyl or tert-amyl, and

- further initiators $I_n$ which may, if desired, be present possessing decomposition temperatures $T_n$ of from $T_{min}$ to $T_{max}$,

in the presence of a protective colloid, with the proviso that from 20 to 80% by weight of the $C_1$-$C_{18}$-alkyl ester of acrylic acid are added only after a conversion of from 20 to 80%, based on the amount of monomer used at the beginning, has been reached.

**2.** A bead polymer as claimed in claim 1, wherein at least 50% by weight of the polymer particles have a diameter of from 0.2 to 0.8 mm.

**3.** A bead polymer as claimed in claim 1 or 2, wherein the protective colloid used is a copolymer obtainable from methacrylic acid and methyl methacrylate.

**4.** A bead polymer as claimed in any of claims 1 to 3, obtainable using a total of from 0.001 to 1 mol%, based on the total amount of the monomers used, as the total amount of all initiators.

**5.** A bead polymer as claimed in any of claims 1 to 4, obtainable using from 20 to 80 mol%, based on the total amount of initiators, of initiators which have a decomposition temperature of from 100 to 140°C.

**6.** A bead polymer as claimed in any of claims 1 to 5, obtainable in the presence of a $C_4$-$C_{18}$-alkyl mercaptan as molecular weight regulator.

**7.** A process for the preparation of a bead polymer comprising
from 80 to 99% by weight of at least one $C_1$-$C_{18}$-alkyl ester of methacrylic acid
and
from 1 to 20% by weight of at least one $C_1$-$C_{18}$-alkyl ester of acrylic acid
by polymerization at a temperature of from 100 to 140°C which is virtually constant over the major part of the polymerization time, by means of an initiator system comprising at least two peroxide initiators I having different decomposition temperatures T, where in each case half the initiator has decomposed after 1 hour,

- the initiator $I_{min}$ having the lowest decomposition temperature possessing a decomposition temperature $T_{min}$ of from 60 to 100°C,
- the initiator $I_{max}$ having the highest decomposition temperature possessing a decomposition temperature $T_{max}$ of from 100 to 140°C, the difference between $T_{max}$ and $T_{min}$ being greater than 10°C and $I_{max}$ being a perketal of the formula (I)

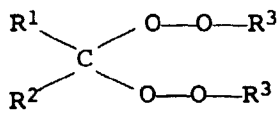

(I),

where $R^1$ and $R^2$ are identical or different alkyl radicals of 1 to 5 carbon atoms, $R^1$ and $R^2$ may be bonded to form a 5-membered or 6-membered ring and $R^3$ is tert-butyl or tert-amyl, and

- further initiators $I_n$ which, if desired, may be present possessing decomposition temperatures $T_n$ of from $T_{min}$ to $T_{max}$,

in the presence of a protective colloid, wherein from 20 to 80% by weight of the $C_1$-$C_{18}$-alkyl ester of acrylic acid are added only after a conversion of from 20 to 80%, based on the amount of monomers used at the beginning, has been reached.

**8.** Use of a bead polymer as claimed in any of claims 1 to 6 for the production of moldings.

**9.** A molding containing a bead polymer as claimed in any of claims 1 to 6.